# EUROPEAN PATENT SPECIFICATION

(11) **EP 0 873 669 B1**
(45) Date of publication and mention of the grant of the patent: **10.04.2002**
(21) Application number: 96940997.8
(22) Date of filing: 25.11.1996
(51) Int. Cl.: H05B 3/68, H05B 6/12, H05B 1/02

(54) **A COOKER**
KOCHGERÄT
RECHAUD

(30) Priority: 23.11.1995 DK 132395
(43) Date of publication of application: 28.10.1998
(73) Proprietor: AKTIEBOLAGET ELECTROLUX, 105 45 Stockholm (SE)
(72) Inventor: MOREAU, Alain, F-51430 Bézannes (FR); ESKILDSEN, Christian, DK-5591 Gelsted (DK)
(74) Representative: Nielsen, Leif
(86) International application number: DK9600491
(87) International publication number: WO9719575

(56) References cited:
- WO-A-93/08668
- US-A- 1 528 000
- US-A- 2 010 768
- US-A- 2 640 906
- US-A- 2 738 411
- US-A- 2 867 711

## Description

The invention relates to a cooker for placing on a surface and comprising a plurality of heating elements or other elements capable of transferring energy to a cooking vessel.

Many cookers are built into a cooktop which forms an integral part of a kitchen element at the required height and in conjunction with certain kitchen utensils in order to form a practical lay-out for preparing food. Smaller kitchens or kitchenettes may make use of a free-standing cooker standing on a work surface consisting of one or two cookplates which are controlled by knobs e.g. on the front of the cooker and supported by small legs. This kind of cooker serves a useful purpose and may be stored in case there is a severe space restriction. It is frequently desirable to have access to a variety of dedicated cookplates, not necessarily simultaneously, and one free-standing cooker of the kind described will frequently not provide this variety. One solution for this problem is to store e.g. two cookers and to use one at a time (see US-A-2 783 411). This is felt to be impractical in that one has to be disconnected and stored and the other connected in the actual situation of use.

WO 93/08668 relates to a double-sided heater in which the two sides are are magnetically susceptible and are heated simultaneously by means of inductive heating. The purpose is either heating/melting the two facing ends of a plastic pipe which are to be joined, or heating of food in dispensing machines by heating simultaneously from above and below by means of shelves constituted of the double-sided heaters.

The invention aims to redress this situation in that the cooker is particular by comprising two surfaces which have different configurations which are put in use by using the upwards facing surface. This configuration permits the retaining of one electrical supply which does not need to be broken or changed. The cooker does not take up more space than one which has a single function only. In practical use the cooker may be flipped during the preparation of food while it must be considered that certain uses may require a heat resisting layer on the table to face a heated surface which is flipped down. All in all this configuration is most useful.

A particular embodiment of the invention relates to the type of heating element which is useful in a configuration as that described above. One manner of constructing a double-faced cooker would be to provide a body with openings on both sides into which are fitted traditional heating elements or induction heating elements. The latter are characterised by consisting only of coils and a core structure for concentrating the field, the whole being driven by an electronic converter of mains power into high-frequency (typically 25-45 kHz) power. This type of construction does not derive any advantage from the fact that the construction is designed to be double-faced, each function is simply repeated.

It is another purpose of the invention to provide a double-sided cooker comprising improved energy supplying elements. This is obtained in that opposing elements are integrated back-to-back. The height of the elements may advantageously correspond to the required distance between the two faces of the cooker. This distance may be smaller in the case of the invention than in a normal case of mounting two traditional elements back to back. In the case of a radiant heating element one such unit has an integral insulating body in which two systems of radiant heat elements, such as heating coils, are fitted. A radiant heating element typically consists of a number of heating wires or coils at the bottom of a well in insulating material. The required insulation thickness for efficient direction of the radiant heat does not need to be doubled at the bottom of each heat radiating well.

An advantageous embodiment is constructed by means of a plate of insulating material separating the two sets of heating wire or coil on either side of the heater, each face of said plate being joined to a ring of insulating material. In this way a complex molding operation for insulating material may be avoided, and the heating element will be made out of standard parts. The plate may be structurally strong in order to support the heating wire or coils and the rings may be made of a more "fluffy" ceramic material which combines low weight with high insulation efficiency and heat tolerance.

In the case of an induction heating element, the core structures may be integrated into one unit, thereby eliminating the need for a separate flux path for each set of field lines. That part of the core structure which forms the dividing line between the two induction heating elements needs one thickness only, thereby reducing the weight of the double sided cooker to less than double the weight of two single-sided cookers back-to-back and at the same time obtaining the advantage of a reduced thickness of the complete double-face cooker.

As mentioned above, the power supply to the cooker may be permanent, and a particular advantage may be obtained by letting a gravity controlled switch decide which face, namely that facing upwards at the time, should be energized.

A cooker according to the invention may be stored away, not only in a traditional cupboard, but more advantageously in a vertical well formed in the worktop or unit top. The power supply may be taken permanently from the bottom of the well, and a safety device may consist in yet another gravity controlled switch ensuring the total disconnection of power to the cooker when it is vertical rather than horizontal.

The invention will be described in greater detail with reference to the drawing, in which
Fig. 1 shows an embodiment of a double-sided cooker,
Fig. 2 shows embodiments of double-sided heating elements, and
Fig. 3 shows an embodiment of a double-sided element built of separate parts.

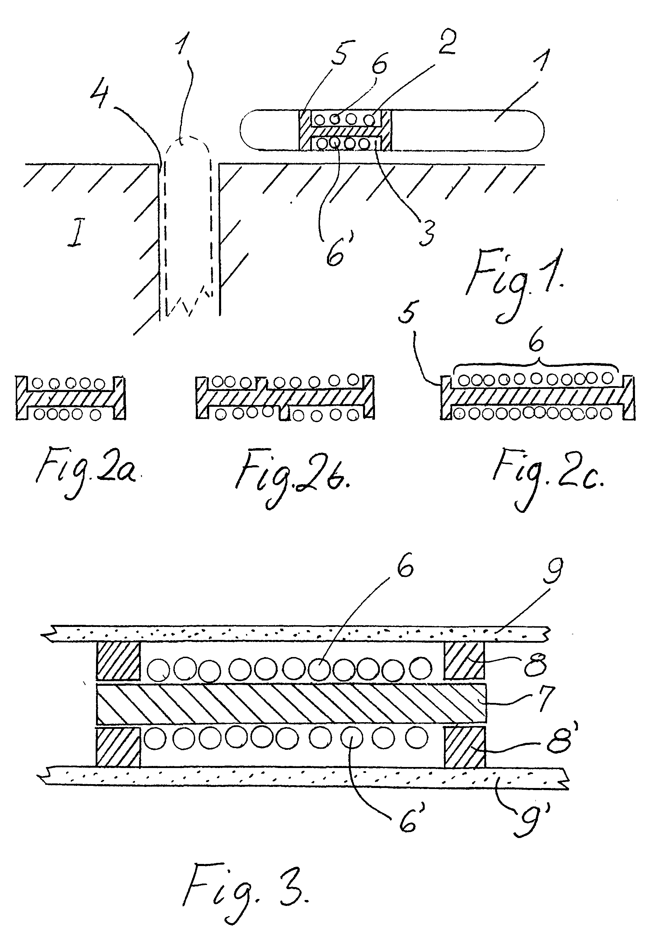

In Fig. 1 is shown a double-sided cooker 1 resting on a worktop T with heating element 2 facing upwards and element 3 facing downwards. The cooker 1 is positioned next to a well 4 in the worktop. Only one heating element is shown, although there is obviously room for others next to the one shown. The heating element consists of an insulating body 5 supporting two sets of heating wires or coils 6 and 6'.

In Fig. 2 are shown three different configurations of double-sided heating elements which all have essentially circular top and bottom surfaces. In Fig. 2c is shown one embodiment where it is possible to turn the cooker in such a way that greater part of the cooker surface is a heater, e.g. for frying.

In Fig. 3 is shown a principle of construction of a heating element according to the invention. An insulating plate 7 is provided on each side with heating coils or wires 6 and 6' which are surrounded by cicular rings 8 and 8' for providing sideways insulation, i.e. upwards direction of the heat radiation. Both sides of the double-sided cooker are supplied with vitro-ceramic plates 9 and 9'. Various supporting brackets for fixing the heating element and the vitro-ceramic plates into the double-sided cooker are not shown.

In all the described embodiments it is equally possible to use induction energy transfer elements instead of heating elements, and embodiments in which coils and surrounding magnetic and thermally stable material are integrated in to a solid block will constitute a very stable and useful combination of features for a cooker. The use of the induction principle for this application has the great advantage that there is no residual heat which might compromise the worktop when the double-sided heater is flipped.

## Claims

1. A cooker (1) for placing on a surface (T) and comprising a plurality of heating elements (2, 3)or other elements capable of transferring energy to a cooking vessel, **characterized in that** the heating elements (2, 3) or other elements are placed back-to-back in an integral fashion in a common support (5) such that the cooker is a double-sided cooker comprising two surfaces which have different configurations, and that only the heating elements or other elements facing upwards are energized in use.

2. A cooker according to claim 1, **characterized in that** opposing elements (2, 3) are integrated back to back so that the height of the element corresponds to the required distance between the two faces (9, 9') of the cooker.

3. A cooker according to claim 2 comprising heating elements, **characterized in that** it comprises a plate of insulating material (7) separating two sets of heating wire or coil (6, 6') on either side of the heater, each face of said plate being joined to a ring (8, 8') of insulating material.

4. A cooker according to claims 1 or 2 comprising induction heating elements, **characterized in that** the core structures of the induction heating elements, are integrated into one unit.

5. A cooker according to any of the preceding claims, **characterized in that** a gravity controlled switch controls the energizing of the upwards facing heating element (2) or other element.

6. A cooker according to any of the preceding claims, **characterized in that** a gravity controlled switch controls the switching-off of the cooker when it is stowed vertically in a well (4) in a worktop or unit top (T).

## Patentansprüche

1. Kochgerät zur Anbringung auf einer Oberfläche (T), und der eine Mehrheit von Heizelementen (2, 3) oder anderen Elementen umfasst, die Energie zu einem Kochgefass übertragen können, **dadurch gekennzeichnet, dass** die Heizelemente (2, 3) oder andere Elemente Rücken an Rücken auf einer intergrierten Weise in einer gemeinsamen Unterstützung (5) angeordnet sind, damit das Kochgerät ein zweiseitiges Kochgerät ist, das zwei Oberflächen umfasst, die verschiedene Konfigurationen ausweisen, und dass ausschließlich die Heizelemente oder andere Elemente, die nach oben gerichtet sind, in Benutzung eingeschaltet sind.

2. Kochgerät nach Anspruch 1, **dadurch gekennzeichnet, dass** entgegengerichte Elemente (2, 3) Rücken an Rücken integriert sind, damit die Höhe des Elementes dem geforderten Abstand zwischen den beiden (9, 9') oberen Seiten des Kochgeräts entspricht.

3. Kochgerät nach Anspruch 2, das Heizelemente umfasst, **dadurch gekennzeichnet, dass** es eine Platte aus Isoliermaterial (7) umfasst, die zwei Sätze von Heizkabeln oder -spirale (6, 6') auf jeder Seite der Heizeinrichtung trennt, wobei jede obere Seite der erwähnten Platte zu einem Ring (8, 8') aus Isoliermaterial zusammengefügt ist.

4. Kochgerät nach Anspruch 1 oder 2, das Induktionsheizelemente umfasst, **dadurch gekennzeichnet, dass** die Kernstrukturen der Induktionsheizelemente in einer Einheit integriert sind.

5. Kochgerät nach jedem der vorigen Ansprüche, **dadurch gekennzeichnet, dass** ein durch Schwerkraft kontrollierter Schalter die Einschaltung des nach oben gerichteten Heizelementes (2) oder des anderen Elementes kontrolliert.

6. Kochgerät nach jedem der vorigen Ansprüche, **dadurch gekennzeichnet, dass** ein durch Schwerkraft kontrollierter Schalter die Abschaltung des Kochgerätes kontrolliert, wenn es vertikal in einem Loch (4) in einer Arbeitsfläche oder Einheitsfläche (T) angebracht ist.

## Revendications

1. Réchaud (1) à être placé sur une surface (T) et comprenant un nombre d'éléments chauffants (2, 3) ou d'autres éléments capables de transférer de l'énergie à une marmite, **caractérisé en ce que** les éléments chauffants (2, 3) ou d'autres éléments sont placés dos-à-dos dans une création intégrale dans un support commun (5) de sorte que le réchaud constitue un réchaud double face comprenant deux surfaces possédant des configurations différentes, et que seulement les éléments chauffants ou d'autres éléments tournés vers le haut sont activés en utilisation.

2. Réchaud selon la revendication 1 **caractérisé en ce que** les éléments opposés (2, 3) sont intégrés dos-à-dos de sorte que la hauteur de l'élément correspond à la distance demandée entre les deux faces (9, 9') du réchaud.

3. Réchaud selon la revendication 2 comprenant des éléments chauffants, **caractérisé en ce qu'**elle comprend une plaque de matière isolante (7) séparant deux séries de fil chauffant ou bobine chauffante (6, 6') sur chaque côté du corps de chauffe, chaque face de ladite plaque étant jointe à une bague (8, 8') de matière isolante.

4. Réchaud selon la revendication 1 ou 2 comprenant des éléments chauffants d'induction **caractérisé en ce que** les structures de coeur des éléments chauffants d'induction, sont intégrées dans une seule unité.

5. Réchaud selon l'une quelconque des revendications précédentes, **caractérisé en ce qu'**un commutateur contrôlé par gravitation contrôle le déclenchement de l'élément chauffant tourné vers le haut (2) ou autre élément.

6. Réchaud selon l'une quelconque des revendications précédentes, **caractérisé en ce qu'**un commutateur contrôlé par gravitation contrôle la déconnexion du réchaud lorsqu'elle est rangée verticalement dans un loge (4) dans le dessus de la table ou dessus de l'unité (T).
